# EUROPÄISCHE PATENTSCHRIFT

(11) **EP 0 433 347 B1**
(45) Veröffentlichungstag und Bekanntmachung des Hinweises auf die Patenterteilung: **16.06.1993**
(21) Anmeldenummer: 89910079.6
(22) Anmeldetag: 06.09.1989
(51) Int. Cl.: B62D 5/06

(54) **HILFSKRAFTLENKUNG, INSBESONDERE FÜR KRAFTFAHRZEUGE**
POWER-ASSISTED STEERING, IN PARTICULAR FOR MOTOR VEHICLES
DIRECTION ASSISTEE, NOTAMMENT POUR VEHICLES A MOTEUR

(30) Priorität: 10.09.1988 DE 3830830
(43) Veröffentlichungstag der Anmeldung: 26.06.1991
(73) Patentinhaber: ZF FRIEDRICHSHAFEN Aktiengesellschaft, 88038 Friedrichshafen (DE)
(72) Erfinder: ELSER, Dieter, D-7080 Essingen (DE); HOLUB, Heinrich, D-7070 Schwäbisch Gmünd (DE)
(86) Internationale Anmeldenummer: EP8901038
(87) Internationale Veröffentlichungsnummer: WO9002679

(56) Entgegenhaltungen:
- EP-A- 0 218 982
- DE-B- 1 750 263

## Beschreibung

Die Erfindung betrifft eine Hilfskraftlenkung, insbesondere für Kraftfahrzeuge, nach dem Oberbegriff des Anspruches 1. Darin ist ein Servozylinder angeordnet, der durch einen Servokolben in zwei Arbeitsräume unterteilt wird. Eine in der Lenkung angeordnete hydraulische Lenkbegrenzungseinrichtung weist eine Schaltstange auf, die in dem Servozylinder in axialer Richtung festgelegt ist. Die Schaltstange ist in einer Bohrung des Servokolbens geführt und derart ausgebildet, daß eine Verbindung zwischen den beiden Arbeitsräumen durch die Bohrung dann aufgesteuert wird, wenn der Servokolben einen bestimmten Hub zurückgelegt hat.

Eine derartige Hilfskraftlenkung ist bekannt aus der DE-PS 17 50 263. Die Lenkbegrenzungseinrichtung dieser Hilfskraftlenkung zeichnet sich durch einen einfachen Aufbau aus. Nachteilig ist bei dieser Ausführung jedoch, daß bei einer Umkehrung der Lenkrichtung, d. h., wenn der Servokolben aus seiner Endlage in Richtung auf die Neutralstellung zurückbewegt werden soll, die Anfangsbewegung ohne Hilfskraftunterstützung nur durch die Handkraft am Lenkhandrad erfolgen muß. Erst wenn der Servokolben relativ zu der Schaltstange so weit in Richtung auf seine Neutralstellung zurückbewegt wurde, daß die Verbindung zwischen den beiden Arbeitsräumen des Servozylinders unterbrochen ist, kann sich in einem der Arbeitsräume ein Servodruck aufbauen.

Der Erfindung liegt die Aufgabe zugrunde, die bekannte Hilfskraftlenkung derart zu verbessern, daß der Servokolben bereits beim Beginn einer Rückstellbewegung aus seinen beiden Endstellungen heraus mit dem erforderlichen Arbeitsdruck beaufschlagt werden kann.

Diese Aufgabe wird durch die im Anspruch 1 gekennzeichnete Hilfskraftlenkung gelöst. Eine zweckmäßige und vorteilhafte Ausgestaltung ist in dem Unteranspruch angegeben.

Die Lösung besteht vor allem darin, daß die in dem Servokolben geführte Schaltstange eine durchgehende Längsbohrung und zwei Queröffnungen aufweist, die in den Endstellungen des Servokolbens vor einem Endanschlag der gelenkten Fahrzeugräder eine Verbindung zwischen den beiden Arbeitsräumen herstellen. Zwei an den Enden der Schaltstange angeordnete Rückschlagventile ermöglichen diese Verbindung jedoch nur, wenn sich der Servokolben in Richtung auf seine Endstellungen bewegt. Bei einer Rückstellbewegung des Servokolbens aus seinen. beiden Endstellungen in Richtung auf die Neutralstellung wird die Verbindung sofort abgesperrt. Eine Rücklenkbewegung des Servokolbens kann deshalb sofort mit der vollen erforderlichen Hilfskraftunterstützung erfolgen. Ein besonders einfacher Aufbau ergibt sich, wenn die beiden Rückschlagventile als federlose Kugelventile ausgebildet sind.

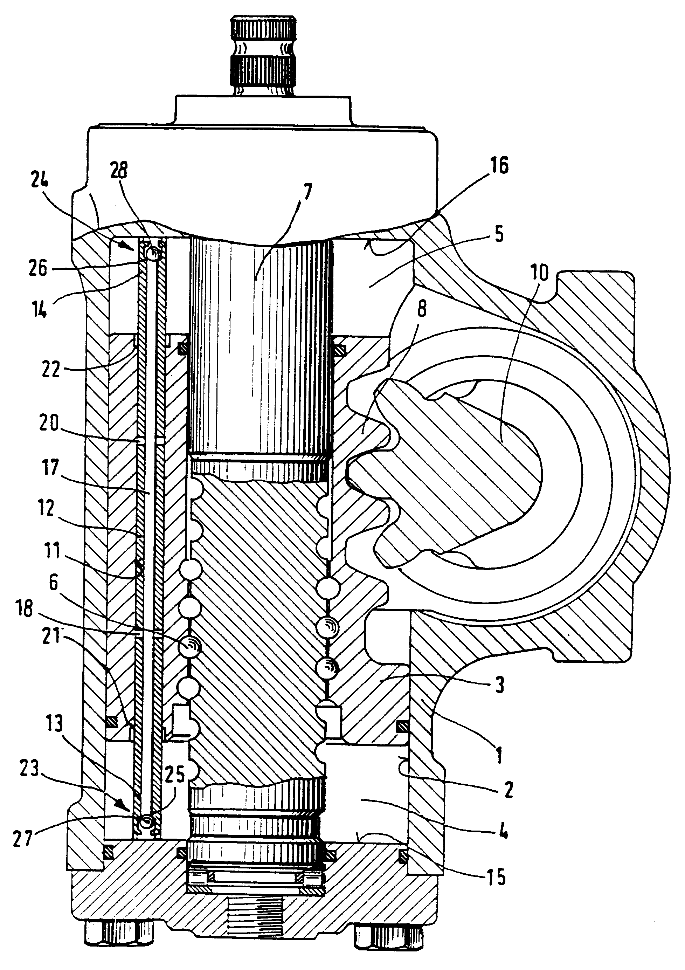

Die Erfindung wird im folgenden anhand eines in einer Zeichnung dargestellten Ausführungsbeispieles näher erläutert. Die einzige Zeichnung zeigt einen Längsschnitt durch die erfindungsgemäße Hilfskraftlenkung.

Ein Lenkgetriebegehäuse 1 enthält einen Servozylinder 2 In dem Servozylinder 2 ist ein Servokolben 3 axial verschiebbar angeordnet. Der Servokolben 3 trennt zwei in dem Servozylinder 2 angeordnete Arbeitsräume 4 und 5 voneinander. Der Servokolben 3 steht über eine Kugelumlaufeinrichtung 6 in trieblicher Verbindung mit einer Lenkspindel 7. Die Lenkspindel 7 ist in dem Lenkgetriebegehäuse 1 drehbar aber axial unverschiebbar gelagert. Der Servokolben 3 ist außerdem über eine Verzahnung 8 trieblich mit einer Lenkwelle 10 verbunden.

In einer Bohrung 11 des Servokolben 3, die parallel zur Längsachse des Servozylinders 2 liegt, ist eine Schaltstange 12 dichtend geführt. Die Schaltstange 12 ist in dem Servozylinder 2 dadurch in axialer Richtung festgelegt, daß ihre beiden Enden 13 und 14 an zwei Endflächen 15 und 16 des Servozylinders 2 anliegen.

Die Schaltstange 12 weist eine durchgehende Längsbohrung 17 auf. Außerdem weist die Schaltstange 12 zwei Queröffnungen 18 und 20 auf, über die in den Endstellungen des Servokolbens 3 eine Verbindung hergestellt wird zwischen dem jeweils mit Hochdruck beaufschlagten Arbeitsraum 4 bzw. 5 und der Längsbohrung 17 der Schaltstange 12. Der Abstand der Queröffnungen 18 und 20 von den Enden 14 und 13 der Schaltstange 12 entspricht im wesentlichen der axialen Länge des Servokolbens 3. Die genaue Lage der Queröffnungen 18 und 20 wird dadurch bestimmt, daß die Verbindung zwischen dem jeweiligen Arbeitsraum 4 bzw. 5 und der Längsbohrung 17 hergestellt sein muß, bevor der mechanische Anschlag der zu lenkenden Fahrzeugräder erreicht ist. In dem dargestellten Ausführungsbeispiel wirken die Queröffnungen 18 und 20 mit zwei Steuerkanten 21 und 22 zusammen, die in Ansenkungen der Bohrung 11 oder direkt an den Endflächen des Servokolbens 3 angeordnet sind.

An jedem Ende 13 und 14 der Schaltstange 12 ist ein Rückschlagventil 23 bzw. 24 angeordnet. Dazu sind in die Schaltstange 12 Ventilsitze 25 und 26 eingedreht. Kugeln 27 und 28 bilden die Schließkörper. Die Kugeln 27 und 28 werden durch teilweises Umbördeln der Enden der Schaltstange 12 in der Schaltstange 12 gehalten.

Im folgenden wird die Funktion der Hilfskraftlenkung beschrieben: Wird beispielsweise der obere Arbeitsraum 5 mit Drucköl aus einer nicht dargestellten Druckölquelle über ein ebenfalls nicht dargestelltes Lenkventil versorgt, so wirkt auf den Servokolben 3 eine die eingeleitete Lenkkraft unterstützende Kraft in der Zeichnung in Richtung nach unten. Nähert sich der Servokolben 3 seiner unteren Endstellung, so wird über die Queröffnung 20 der mit Druck beaufschlagte obere Arbeitsraum 5 mit der Längsbohrung 17 der Schaltstange 12 und über das geöffnete Rückschlagventil 23 mit dem unteren Arbeitsraum 4 verbunden, der in diesem Betriebszustand mit einem nicht dargestellten Behälter verbunden ist. In diesem Augenblick wird die Hilfskraftunterstützung unterbrochen, da der Hochdruck in dem rechten Arbeitsraum 5 abgebaut wird.

Soll aus dieser unteren Endstellung des Servokolbens 3 die Lenkung in ihre Neutrallage zurückbewegt werden, so wird der untere Druckraum 4 mit Druck beaufschlagt. Dieser Druck schließt sofort das untere Rückschlagventil 23, so daß sich sofort der erforderliche Arbeitsdruck aufbauen kann.

### Bezugszeichen

- 1: Lenkgetriebegehäuse
- 2: Servozylinder
- 3: Servokolben
- 4: Arbeitsraum
- 5: Arbeitsraum
- 6: Kugelumlaufeinrichtung
- 7: Lenkspindel
- 8: Verzahnung
- 9: -
- 10: Lenkwelle
- 11: Bohrung
- 12: Schaltstange
- 13: Ende der Schaltstange
- 14: Ende der Schaltstange
- 15: Endfläche
- 16: Endfläche
- 17: Längsbohrung
- 18: Queröffnung
- 19: -
- 20: Queröffnung
- 21: Steuerkante
- 22: Steuerkante
- 23: Rückschlagventil
- 24: Rückschlagventil
- 25: Ventilsitz
- 26: Ventilsitz
- 27: Kugel
- 28: Kugel

## Patentansprüche

1. Hilfskraftlenkung, insbesondere für Kraftfahrzeuge,
- mit einem durch einen Servokolben (3) in zwei Arbeitsräume (4, 5) unterteilten, mit Drucköl beaufschlagbaren Servozylinder (2),
- mit einer hydraulischen Lenkbegrenzungseinrichtung, die eine in dem Servozylinder (2) in axialer Richtung festgelegte Schaltstange (12) aufweist,
- wobei die Schaltstange (12) dichtend in einer Bohrung (11) des Servokolbens (3) geführt und derart ausgebildet ist, daß bei einem bestimmten zurückgelegten Hub des Servokolbens (3) durch die Bohrung (11) eine Verbindung zwischen den beiden Arbeitsräumen (4, 5) herstellbar ist,
dadurch **gekennzeichnet,**
- daß die Schaltstange (12) eine durchgehende Längsbohrung (17) aufweist,
- daß die Schaltstange (12) zwei Queröffnungen (18, 20) aufweist, die in den Endstellungen des Servokolbens (3) eine Verbindung herstellen zwischen dem jeweils mit Hochdruck beaufschlagten Arbeitsraum (4, 5) und der Längsbohrung (17) der Schaltstange (12) und
- daß an jedem Ende (13, 14) der Schaltstange (12) ein Rückschlagventil (23, 24) angeordnet ist, das einen Öldurchfluß aus dem Inneren der Längsbohrung (17) in den benachbarten Arbeitsraum (4, 5) ermöglicht und einen Öldurchfluß aus dem benachbarten Arbeitsraum (4, 5) durch die Längsbohrung (12) absperrt.

2. Hilfskraftlenkung nach Anspruch 1, dadurch **gekennzeichnet,** daß die Rückschlagventile (23, 24) als Kugelventile ausgebildet sind.

## Claims

1. Power-assisted steering, more particularly for motor vehicles, with a servo cylinder (2) which is divided by a servo piston (3) into two working chambers (4, 5) and can be acted upon by compressed oil, with a hydraulic steering limiting device which comprises a switching rod (12) fixed within the servo cylinder (2) in the axial direction, the switching rod (12) being guided in a sealing-tight manner in a bore (11) of the servo piston (3) and being constructed in such a manner that, once the servo piston (3) has travelled a given distance through the bore (11), a connection can be formed between the two working chambers (4, 5),
characterised in that the switching rod (12) comprises a continuous longitudinal bore (17), the switching rod (12) comprises two transverse openings (18, 20), which in the end positions of the servo piston (3) form a connection between the respective working chamber (4, 5) acted upon by high pressure and the longitudinal bore (17) of the switching rod (12), and at each end (13, 14) of the switching rod (12) a non-return valve (23, 24) is arranged, which allows oil to flow from within the longitudinal bore (17) into the adjacent working chamber (4, 5) and prevents oil from flowing from the adjacent working chamber (4, 5) through the longitudinal bore (12).

2. Power-assisted steering according to claim 1, characterised in that the non-return valves (23, 24) are constructed as ball valves.

## Revendications

1. Direction assistée, notamment pour véhicules à moteur,
- pourvue d'un cylindre d'assistance (2) alimenté en huile sous pression et divisé en deux chambres de travail (4, 5) par un piston d'assistance (3),
- et pourvue d'un dispositif hydraulique de limitation de braquage qui comporte une barre de commande (12) fixée en direction axiale dans le cylindre (2),
- et dans laquelle la barre de commande (12) est insérée de manière étanche dans un alésage (11) du piston (3) et est agencée de telle façon qu'une communication peut s'établir entre les deux chambres de travail (4, 5) à travers ledit alésage (11) quand le piston (3) a parcouru une course donnée,
**caractérisée :**
- en ce que la barre de commande (12) comporte un trou longitudinal continu (17),
- en ce que la barre de commande (12) comporte deux orifices transversaux (18, 20) qui, dans les positions de fin de course du piston (3), établissent respectivement une communication entre celle des chambres de travail (4, 5) qui est alimentée en haute pression et le trou longitudinal (17) de la barre de commande (12) , et
- en ce qu'à chaque extrémité (13, 14) de la barre de commande (12) se trouve un clapet anti-retour (23, 24) qui permet à de l'huile de passer de l'intérieur du trou longitudinal (17) à la chambre de travail adjacente (4, 5) et empêche l'huile de sortir de la chambre de travail adjacente (4, 5) par le trou longitudinal (12).

2. Direction assistée selon la revendication 1, **caractérisée** en ce que les clapets anti-retour (23, 24) sont formés par des clapets à bille.
